# EUROPEAN PATENT SPECIFICATION

(11) **EP 2 107 035 B1**
(45) Date of publication and mention of the grant of the patent: **03.07.2013**
(21) Application number: 08154005.6
(22) Date of filing: 03.04.2008
(51) Int. Cl.: B66F 17/00, B60R 21/0132, G01P 21/00

(54) **A collision sensor arrangement, a method for detecting collision and a computer program product**
Kollisionssensoranordnung, Verfahren zum Bestimmen einer Kollision und Computerprogrammprodukt
Agencement de capteur de collision, procédé de détection d'une collision et produit de programme informatique

(43) Date of publication of application: 07.10.2009
(73) Proprietor: BT Products AB, 595 81 Mjölby (SE)
(72) Inventor: Precenth, Gert, 595 53 Mjölby (SE); Valfridsson, Göran, 595 54 Mjölby (SE)
(74) Representative: Herbjørnsen, Rut

(56) References cited:
- CN-Y- 2 625 903
- US-A1- 2003 158 699
- US-A1- 2003 236 604
- US-A1- 2007 150 221
- US-A1- 2007 268 148
- US-B1- 6 195 605
- SEBASTIAN BÜTEFISCHBUTEFISCH ET AL: "Three-Axes Monolithic Silicon Low-g Accelerometer" JOURNAL OF MICROELECTROMECHANICAL SYSTEMS, IEEE SERVICE CENTER, PISCATAWAY, NJ, US, vol. 9, no. 4, 1 December 2000 (2000-12-01), XP011034586 ISSN: 1057-7157

## Description

### Technical field

The present invention relates in general to collision sensors and, in particular to collision sensors mounted on fork lifts. The present invention further relates to a control unit, a collision sensor arrangement, a method for arranging a collision sensor, and a computer program product.

### Background of the invention

Today, there is a wide use of industrial fork lifts in the industry. Fork lifts are also known as fork lift trucks, forklift vehicles, industrial trucks, floor conveyors or the like. There is often a large numbers of fork lifts used by several operators in, e.g. warehouses, storage facilities, and transportation halls, etc., for the purpose of storing, hauling and loading various types of goods and products onto, e.g. containers, trucks, ships, etc. The fork lifts may be provided by for example a storage company and/or a fork lift rental agency.

In order to keep the number of fork lifts used in a particular warehouse in good working condition and updated, there is a lot of maintenance required. This is often due to rough handling by operators and continuous stresses and strains on the fork lift machinery and body. Maintenance is often a time-consuming and arduous task, and can result in that a fork lift is left standing inoperable for long periods of time before being back in full operation again.

Therefore, a superior supervising system may be used to register how the fork lifts are being used by operators, and provide the storage companies and/or agencies with valuable information about how to minimize damage to the fork lifts, transported goods, storage inventory, warehouse buildings, etc. The superior supervising system may be able to register data from the fork lifts, such as, for example, the identity of the operator currently operating the fork lift, information about speeds, distances, battery consumption, the area covered by a fork lift for a certain period of time, etc. The superior supervising system may also be arranged to collect information from collision sensors mounted on the fork lifts in order to determine, for example, the time and force of a possible collision. In the event of a collision, the collision sensors on the fork lifts may further be arranged to shut down the fork lift completely, also known as "shock lockout", or limit the fork lifts operation, also known as "soft monitoring".

A crash detection system is known from the article "Three-Axes monolithic silicon low-g Accelerometer" by Bitefisch et al. (Jour. of Microelectromechanical Sys., v.9, no. 4).

The collision sensors used in the prior art are two-dimensional, planar collision sensors mounted on the fork lifts. The two-dimensional, planar collision sensors may be arranged to determine if the fork lift collision occurred from the back or front, and/or from the right or left side of the fork lift. However, the positioning of such two-dimensional, planar collision sensors is a problem. This is because the two-dimensional, planar collision sensors have to be mounted in a particular orientation on the fork lift corresponding to the fixed directions inherent in the collision sensor.

Also, the two-dimensional, planar collision sensors have to be mounted on a, from a collision viewpoint, stabile and robust spot on the fork lift. The positioning also requires suitable access to the electrical wiring inside the fork lift. The position of the two-dimensional, planar collision sensors should furthermore not obstruct the ordinary use or maintenance of the fork lift.

The problem is also rendered more difficult by the fact that slimmer designs and more excess equipment are constantly decreasing the amount of available space within the fork lifts, and makes it even more difficult to find suitable places within the fork lifts that fulfils the orientation and positioning requirements described above.

### Object of the invention

It is an object of the present invention to achieve a more versatile and easier positioning of a collision sensor.

### Summary of the invention

The object of the present invention is achieved by a collision sensor in a collision sensor arrangement for detecting a collision with a fork lift vehicle. The collision sensor is **characterized in that** it is a three-dimensional collision sensor comprising an accelerometer capable of registering and outputting motions along each perpendicular axis of a Cartesian coordinate system, wherein the three-dimensional collision sensor is arranged to upon powering up, automatically detect a first direction based on the gravitational force; determine a first Cartesian axis as the detected first direction; determine a second and a third Cartesian axis mutually perpendicular to each other and to the first Cartesian axis according to a directional parameter, that is indicative of how the second (x) and third (y) cartesian axes should be determined in order for the output values of the three-dimensional collision sensor to correspond correctly to the orientation of the fork lift vehicle.

The object of the present invention is also achieved by a control unit in a collision sensor arrangement for detecting a collision with a fork lift vehicle. The control unit is characterized in being arranged to receive inputs, or accessing predetermined settings, defining a directional parameter that determines the orientation of a three-dimensional collision sensor in relation to said fork lift vehicle; and transmit said directional parameter to said three-dimensional collision sensor.

The object of the present invention is further achieved by a method for enabling the detection of a collision of a fork lift vehicle comprising a collision sensor arrangement, wherein said collision sensor arrangement comprises a three-dimensional collision sensor and a control unit. The method is characterized by the steps of: automatically detecting, upon powering up the collision sensor, wherein said collision sensor is a three-dimensional collision sensor comprising an accelerometer capable of registering and outputting motions along each perpendicular axis of a Cartesian coordinate system, a first direction based on the gravitational force; determining a first Cartesian axis as said detected first direction; determining a second and a third Cartesian axis mutually perpendicular to each other and to said first Cartesian axis according to a directional parameter, that is indicative of how the second (x) and third (y) cartesian axes should be determined in order for the output values of thethree-dimensional collision sensor to correspond correctly to the orientation of the fork lift vehicle.

The object of the present invention is further achieved by a computer program product for use in a three-dimensional collision sensor in a collision sensor arrangement on a fork lift vehicle, said computer program product comprising computer readable code means, which when run in the a three-dimensional collision sensor causes said three-dimensional collision sensor to perform the steps of: automatically detecting, upon powering up said three-dimensional collision sensor, a first direction based on the gravitational force; determining a first Cartesian axis as said detected first direction; determining a second and a third Cartesian axis mutually perpendicular to each other and to said first Cartesian axis according to a directional parameter, predetermined in the three-dimensional collision sensor or received from a control unit, that determines the orientation of said three-dimensional collision sensor in relation to said fork lift vehicle.

The object of the present invention is further achieved by a computer program product according to claim 10 for use in a control unit in a collision sensor arrangement in a fork lift vehicle, the collision sensor arrangement comprising the control unit and a collision sensor, the computer program product comprising computer readable code means, which when run in the a control unit causes the control unit to perform the steps of: defining a directional parameter that determines the orientation of the three-dimensional collision sensor in relation to the fork lift vehicle; and transmitting the directional parameter to the three-dimensional collision sensor.

An advantage of the above described invention is that it enables an easier positioning of the collision sensor. By having the collision sensor enable to be positioned upright, lying down or on its side, and then automatically oriented based on gravity and the directional parameter, the present invention facilitates a more flexible, easier and versatile mounting of the collision sensor.

A further advantage of the above described invention is that it enables smaller fork lifts to be fitted with a collision sensor. This will also lead to softer handling by the operators of the smaller fork lifts, and thereby also to reduce damages on the fork lifts, transported goods, storage inventory, shelves, warehouse buildings, etc.

A further advantage of the above described invention is that it makes it easier to find a stabile and robust spot for mounting the collision sensor on a fork lift.

Further advantageous embodiments of the control device, the method, and the computer program product are set forth in the dependent claims, which correspondently describe further advantageous embodiments of the present invention.

### Brief description of the drawings

The present invention will be described in more detail in the following, with reference to the appended drawings, in which:
Fig. 1 is an illustration of an example of an industrial fork lift.
Fig. 2 is an example of a collision sensor attachable to a fork lift according to the prior art.
Fig. 3 is a collision sensor arrangement for use on a fork lift according to an embodiment of the present invention.
Fig. 4 is a collision sensor orientation on a fork lift according to an embodiment of the present invention.
Fig. 5 is a collision sensor orientation on a fork lift according to another embodiment of the present invention.
Fig. 6 is a collision sensor orientation on a fork lift according to a further embodiment of the present invention.
Fig. 7 is a flowchart illustrating an exemplary operation of a control unit according to an embodiment of the present invention.
Fig. 8 is a flowchart illustrating a exemplary operation of a collision sensor according to an embodiment of the present invention.

### Description of the preferred embodiments

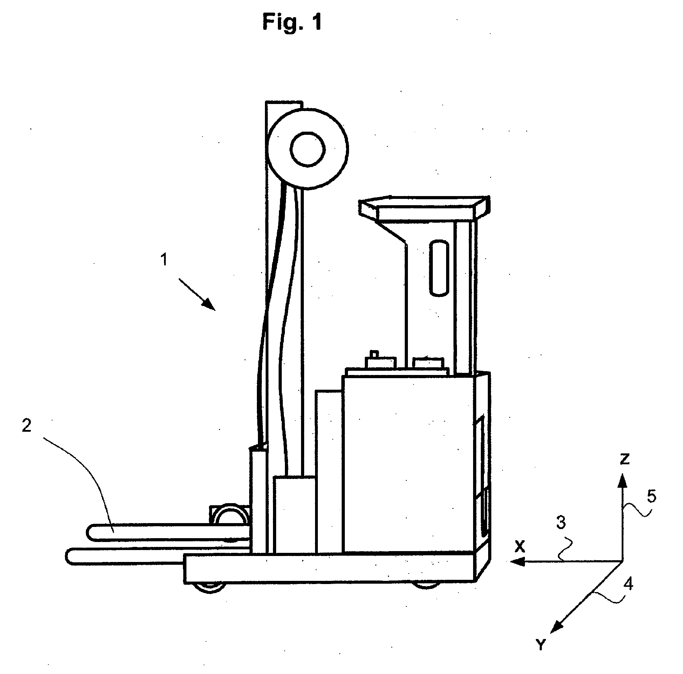

Fig. 1 illustrates an example of a fork lift vehicle 1, also referred to as a fork lift in the following. The fork lift 1 is arranged with forks 2 for lifting pallets comprising various types of goods or products or the like, up onto, for example, storage shelves, other loaded pallets, containers, trucks, ships, etc. A pallet has generally standard sized dimensions with a pair of tunnels for receiving the forks 2 of the fork lift vehicle 1. The fork lift vehicle 1 in general is arranged to use its ability to drive forward and backwards to insert the forks in said pallet. Other arrangements are possible where the forks 2 can be moved forward and backwards without the movement of the complete fork lift vehicle 1. The hydraulics of the fork lift vehicle 1 generally comprises a hydraulic pump, pipes and valves for providing high lifting capability. Even the smallest hand trucks are able to lift loads up to 1000 kg.

The forks 2 may be arranged, as shown in Fig. 1, in the forward direction of the fork lift 1, but may also arranged to rotate around an axis allowing a fork turn radius of up to 180° or more. It should be noted that the specific configuration of parts in the fork lift 1 is not relevant to the object of the present invention, however, the particular design of the fork lift 1, such as, the actual size, available areas suitable for attaching a collision sensor, etc., may be relevant to the object of the present invention and in order to be able to benefit from the advantages thereof.

Also shown in Fig. 1 is a Cartesian coordinate system 3, defined by the three Cartesian axes x 3, y 4 and z 5, which will be used as a common frame of reference in order to properly describe the present invention in the following. The Cartesian x-axis 3 may be used to describe the forward/backward direction of the fork lift 1, the Cartesian y-axis 4 may be used to describe the right/left direction of the fork lift 1 and the Cartesian z-axis 5 may be used to describe the up/down direction of the fork lift 1.

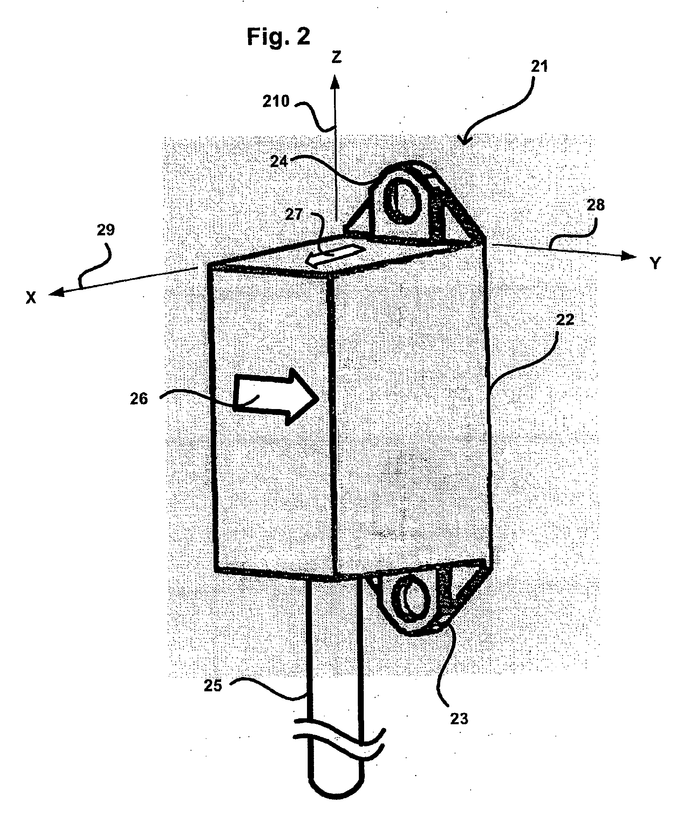

Fig. 2 illustrates an example of a conventional two-dimensional collision sensor 21 mounted on a fork lift 1 according to the prior art.

As shown in Fig. 2, the conventional two-dimensional collision sensor 21 comprises a housing 22 arranged with attachment means 23, 24 for mounting the conventional two-dimensional collision sensor 21 to a fork lift 1. The conventional two-dimensional collision sensor 21 further comprises a fixed power and communications wiring 22 for supplying power to the conventional two-dimensional collision sensor 21 and for sending sensor data from the conventional two-dimensional collision sensor 21 to, for example, a control unit.

The inherent construction of conventional two-dimensional collision sensors, such as, for example, the conventional two-dimensional collision sensor 21, is such that it only allows the conventional two-dimensional collision sensors to be attached or mounted to the fork lift 1 according to four different orientations, that is, having 4 degrees of freedom. As will become apparent, the perspective view of the conventional two-dimensional collision sensor 21 shown in Fig. 2 may be used as a basis for describing these different orientations.

The directional arrow 26 on the conventional two-dimensional collision sensor 21 describes how the conventional two-dimensional collision sensor 21 must be mounted on the fork lift 1 in order for registered motions in the direction of the y-axis 28 by the conventional two-dimensional collision sensor 21 to correspond to the right/left direction of the fork lift 1, i.e. along the Cartesian y-axis 4 in Fig. 1, and be outputted by the conventional two-dimensional collision sensor 21 as such values. Correspondingly, the directional arrow 27 on the conventional two-dimensional collision sensor 21 describes how the conventional two-dimensional collision sensor 21 must be mounted on the fork lift 1 in order for registered motions in the direction of the x-axis 29 by the conventional two-dimensional collision sensor 21 to correspond to the forward/backward direction of the fork lift 1, i.e. along the Cartesian x-axis 3 in Fig. 1, and be outputted by the conventional two-dimensional collision sensor 21 as such values.

Below the four different orientations are described using the view of the conventional two-dimensional collision sensor 21 in Fig. 2. The first orientation of the conventional two-dimensional collision sensor 21 is to mount the conventional two-dimensional collision sensor 21 on the fork lift 1, as shown in Fig. 1, with the directional arrow 27 oriented in the forward direction of the fork lift 1 and the directional arrow 26 oriented in the left direction of the fork lift 1.The second orientation of the conventional two-dimensional collision sensor 21 is to mount the conventional two-dimensional collision sensor 21 on the fork lift 1 rotated 180° about the Cartesian x-axis 29, that is, with the directional arrow 27 still oriented in the forward direction of the fork lift 1, but the directional arrow 26 now oriented in the right direction of the fork lift 1. The third orientation of the conventional two-dimensional collision sensor 21 is to mount the conventional two-dimensional collision sensor 21 on the fork lift 1 rotated 180° about the Cartesian y-axis 28, that is, with the directional arrow 27 now oriented in the backward direction of the fork lift 1 and the directional arrow 26 still oriented in the left direction of the fork lift 1. The fourth orientation of the conventional two-dimensional collision sensor 21 is to mount the conventional two-dimensional collision sensor 21 on the fork lift 1 rotated 180° about the Cartesian z-axis 210, that is, with the directional arrow 27 now oriented in the backward direction of the fork lift 1 and the directional arrow 26 now oriented in the right direction of the fork lift 1.

By having 4 degrees of freedom, that is, 4 ways of mounting the conventional two-dimensional collision sensor 21 on the fork lift 1, there are instances when there is no suitable location or spot on the fork lift 1 to attach the conventional two-dimensional collision sensor 21. For example, the conventional two-dimensional collision sensor 21 may only be unsuitably placed in a location or spot where it gets in the way of other parts of the fork lift 1, such as, cabling, wiring, various electronic components, control units, the engine, etc.

Further requirements for positioning and orienting the conventional two-dimensional collision sensor 21 on the fork lift 1 are numerous. The conventional two-dimensional collision sensor 21 must be attached to a solid and robust part of the fork lift 1; otherwise, the conventional two-dimensional collision sensor 21 may accidentally indicate that a collision has occurred when, for example, an operator suddenly performs a fast brake, drives over a bump in a warehouse floor, closes a maintenance hatch for the engine, etc. The conventional two-dimensional collision sensor 21 must also be attached in a position protected by the day-to-day work and toil of the operator of the fork lift 1; otherwise, the conventional two-dimensional collision sensor 21 may accidentally indicate that a collision has occurred when, for example, the operator gets in or out of the operator compartment of the fork lift 1 or bumps into the collision sensor; etc. The conventional two-dimensional collision sensor 21 must also be attached in a position and in a way such that it achieves an easy and suitable electrical wiring of the power and communications cables. It is further preferable if the conventional two-dimensional collision sensor 21 and its associated control unit or computational device is of a low complexity, so that the mathematical or logical computations required in order to perform collision estimations are reduced as much as possible. All of these requirements make it very difficult to mount the conventional two-dimensional collision sensor 21 onto the fork lift 1.

Theses issues are addressed by a collision sensor, a control unit, a collision sensor arrangement, a method and a computer program product according to the present invention, as will become apparent by the following description and accompanied drawings.

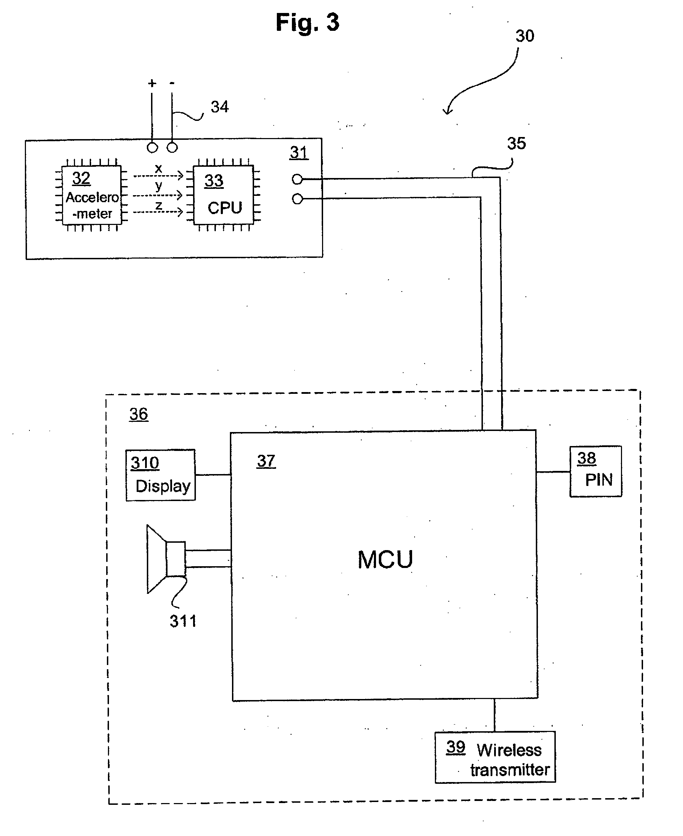

Fig. 3 shows a collision sensor arrangement for use on a fork lift 1 according to an embodiment of the present invention.

The collision sensor arrangement 30 comprises a three-dimensional collision sensor 31 and a control unit 36. The three-dimensional collision sensor 31 is arranged to communicate with the control unit 36 and transmit three-dimensional collision sensor data to the control unit 36 over a communication bus 35, e.g. a Controller Area Network-bus (CAN). The three-dimensional collision sensor 31 further comprises a power inlet 34. The communication bus 35 and the electrical wiring to the power inlet 34 may be provided in a single, detachable cable. The control unit 36 may also operate as a power supply for the three-dimensional collision sensor 31.

The three-dimensional collision sensor 31 comprises an accelerometer 32 capable of registering and outputting motions along each mutually perpendicular axis x, y, and z of a Cartesian coordinate system, such as, for example, the Cartesian coordinate system shown in Fig. 1. A central processing unit 33 (CPU) may be arranged to receive, from the accelerometer 32, the three-dimensional motion data corresponding to each of the three mutually perpendicular axes x, y, and z of the accelerometer 32. The CPU 33 may also be arranged to process the three-dimensional motion data, and send the processed three-dimensional motion data to the control unit 36.

The control unit 36 may comprise a main processing unit (MCU) 37, input means 38 for an operator to provide, for example, a PIN-code, a wireless transmitter 39, a display 310 and audio output means 311. The MCU 37 of the control unit 36 may be arranged to communicate with the three-dimensional collision sensor 31 over the communications bus 35. The MCU 37 may also be arranged to transmit the three-dimensional motion data received from the three-dimensional collision sensor 31, using the wireless transmitter 39, to other wireless communication units, such as, for example, a main computer or other superior supervising systems. The MCU 37 may further be arranged to shut down or limit the operation of the fork lift 1 based on the three-dimensional motion data forwarded by the three-dimensional collision sensor 31. The MCU 37 may also be arranged to process the three-dimensional motion data forwarded by the three-dimensional collision sensor 31 to, for example, perform axis-transformations, etc.

According to the present invention, the accelerometer 32 of the three-dimensional collision sensor 31 may be arranged to upon powering up, that is, when the power to the three-dimensional collision sensor 31 is turned on, automatically orient itself by detecting which direction is up or down. This may be performed by the accelerometer 32 based on the gravitational force of the Earth that affects the accelerometer 32 with a value of 1 g, where g is the gravitational force at the Earth's surface and is approximately 9.8 m/s². Accordingly, the three-dimensional collision sensor 31 may automatically determine and align a first Cartesian axis in the upwards (or downwards) direction of the three-dimensional collision sensor 31, that is, along the Cartesian z-axis 5 in Fig. 1.

In addition, the control unit 36 may be arranged to define a directional parameter that describes the orientation of the three-dimensional collision sensor 31 in relation to the fork lift 1 when mounted on the fork lift 1. The directional parameter may be a predetermined parameter or a manually settable parameter. The directional parameter may be arranged to indicate how the remaining two Cartesian axes, that is, the x- and y-axes, of the three-dimensional collision sensor 31 should be determined in order for the output values of the three-dimensional collision sensor 31 to correspond correctly to the orientation of the fork lift 1. That is, for example, the outputted values of the x-axis may correspond to the forward direction of the fork lift 1 and the outputted values of the y-axis may correspond to the left direction of the fork lift 1.

The control unit 36 may be arranged to transmit the directional parameter to the three-dimensional collision sensor 31. The three-dimensional collision sensor 31 may be arranged to receive the directional parameter from the control unit 36. The three-dimensional collision sensor 31 may then be arranged to determine and align a second Cartesian axis, i.e. the Cartesian x-axis, and a third Cartesian axis, i.e. the Cartesian y-axis, mutually perpendicular to each other and to the first Cartesian axis, i.e. the Cartesian z-axis, according to the received directional parameter.

It should also be noted that the directional parameter may also be a predetermined directional parameter that is set in the collision sensor 31 upon manufacturing. This provides an additional advantage by avoiding any parameters in the control unit 36.

The three-dimensional collision sensor 31 and the control unit 36 according to the present invention enable a more versatile and easier positioning of the three-dimensional collision sensor 31. As will become apparent in following, by having the three-dimensional collision sensor 31 enable to be positioned upright, lying down or on its side, and then automatically oriented based on gravity and the directional parameter, the three-dimensional collision sensor 31 facilitates a more flexible and versatile mounting onto the fork lift 1. The three-dimensional collision sensor 31 thereby also enables smaller fork lifts to be fitted with a collision sensor, which may lead to softer handling by the operators of the smaller fork lifts, and thereby also to reduce damages on the fork lifts, transported goods, storage inventory, shelves, warehouse buildings, etc.

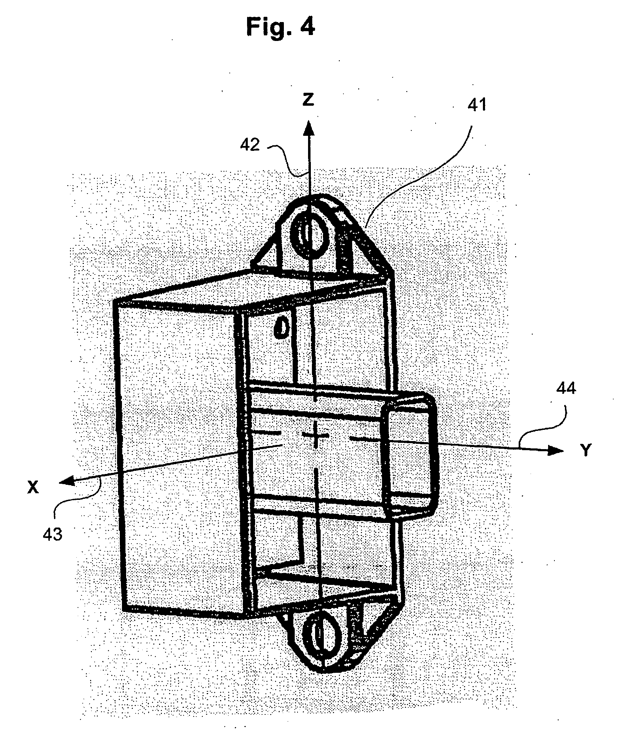

The versatility and flexibility in the mounting of the three-dimensional collision sensor 31 on the fork lift 1 is described by the collision sensor orientations according to the further embodiments of the present invention described in the following with reference to Figs. 4-6.

In the exemplary orientation according to Fig. 4, the three-dimensional collision sensor 41 is oriented to be mounted upright and vertically attached to the fork lift 1. The Cartesian z-axis 42 in Fig. 4 is determined based on gravity as previously described. By having the three-dimensional collision sensor 41 oriented to be mounted upright and vertically attached to the fork lift 1, there are 4 degrees of freedom in its further orientation, since it must correlate with how the three-dimensional collision sensor 41 is actually mounted on the fork lift 1. This exemplary orientation is similar to the conventional directional orientation described in reference to Fig. 2.

The first orientation (shown in Fig. 4) of the three-dimensional collision sensor 41 is to mount the three-dimensional collision sensor 41 on the fork lift 1, with the x-axis 43 oriented in the forward direction of the fork lift 1 and the y-axis 44 oriented in the left direction of the fork lift 1.

The second orientation of the three-dimensional collision sensor 41 is to mount the three-dimensional collision sensor 41 on the fork lift 1 rotated 180° about the Cartesian x-axis 43, that is, with the x-axis 43 still oriented in the forward direction of the fork lift 1, but the y-axis 44 now oriented in the right direction of the fork lift 1. That is, the obtained view as the three-dimensional collision sensor 41, oriented as shown in Fig. 4, is turned upside-down.

The third directional orientation of the three-dimensional collision sensor 41 is to mount three-dimensional collision sensor 41 on the fork lift 1 rotated 180° about the Cartesian y-axis 44, that is, with the x-axis 43 now oriented in the backward direction of the fork lift 1 and the y-axis 44 still oriented in the left direction of the fork lift 1. That is, the obtained view as the three-dimensional collision sensor 41, oriented as shown in Fig. 4, is turned upside-down and backwards.

The fourth directional orientation of the three-dimensional collision sensor 41 is to mount the three-dimensional collision sensor 41 on the fork lift 1 rotated 180° about the Cartesian z-axis 42, that is, with x-axis 43 now oriented in the backward direction of the fork lift 1 and the y-axis 44 now oriented in the right direction of the fork lift 1. That is, the obtained view as the three-dimensional collision sensor 41, oriented as shown in Fig. 4, is turned backwards.

Depending on how the three-dimensional collision sensor 41 is actually mounted on the fork lift 1 according to any of the orientations described above, the directional parameter in the control unit 36 may be arranged to indicate this orientation that is actually used in the mounting to the three-dimensional collision sensor 41. The directional parameter may, for example, be set manually by an operator when the three-dimensional collision sensor 41 is mounted on a fork lift, or be a predetermined value comprised in the control unit 36, or in the collision sensor 31, set, for example, during manufacturing of the three-dimensional collision sensor 41 and control unit 36 for a specific fork lift model.

By determining a Cartesian coordinate system according to this directional parameter in the three-dimensional collision sensor 41, the outputted three-dimensional motion data may be used to directly determine that a collision with the fork lift 1 has occurred and how severe the collision is. This is enabled since the three-dimensional motion data directly correlate with the orientation of the fork lift 1.

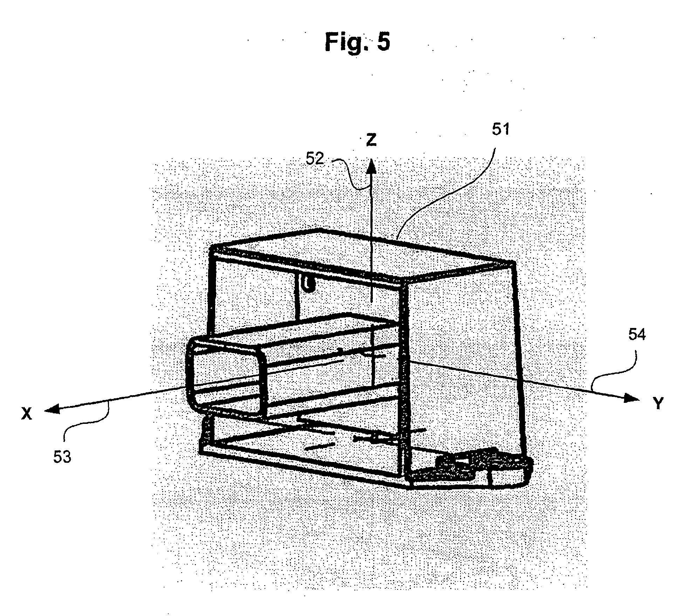

In the exemplary orientation according to Fig. 5, the three-dimensional collision sensor 51 is oriented to be mounted lying down and horizontally attached to the fork lift 1. The Cartesian z-axis 52 in Fig. 5 is determined based on gravity as previously described. By having the three-dimensional collision sensor 51 oriented to be mounted lying down and horizontally attached to the fork lift 1, there are 4 degrees of freedom in its further orientation, since it correlate with how the three-dimensional collision sensor 51 is actually mounted on the fork lift 1.

The first orientation (shown in Fig. 5) of the three-dimensional collision sensor 51 is to mount the three-dimensional collision sensor 51 on the fork lift 1, with the x-axis 53 oriented in the forward direction of the fork lift 1 and the y-axis 54 oriented in the left direction of the fork lift 1.

The second orientation of the three-dimensional collision sensor 51 is to mount the three-dimensional collision sensor 51 on the fork lift 1 rotated 180° about the Cartesian x-axis 53, that is, with the x-axis 53 still oriented in the forward direction of the fork lift 1, but the y-axis 54 now oriented in the right direction of the fork lift 1. That is, the obtained view as the three-dimensional collision sensor 51, oriented as shown in Fig. 5, is turned upside-down.

The third orientation of the three-dimensional collision sensor 51 is to mount three-dimensional collision sensor 51 on the fork lift 1 rotated 180° about the Cartesian y-axis 54, that is, with the x-axis 53 now oriented in the backward direction of the fork lift 1 and the y-axis 54 still oriented in the left direction of the fork lift 1. That is, the obtained view as the three-dimensional collision sensor 51, oriented as shown in Fig. 5, is turned upside-down and backwards.

The fourth orientation of the three-dimensional collision sensor 51 is to mount the three-dimensional collision sensor 51 on the fork lift 1 rotated 180° about the Cartesian z-axis 52, that is, with x-axis 53 now oriented in the backward direction of the fork lift 1 and the y-axis 54 now oriented in the right direction of the fork lift 1. That is, the obtained view as the three-dimensional collision sensor 51, oriented as shown in Fig. 5, is turned backwards.

Depending on how the three-dimensional collision sensor 51 is actually mounted on the fork lift 1 according to any of the orientations described above, the directional parameter in the control unit 36 may be arranged to indicate this orientation that is actually used in the mounting to the three-dimensional collision sensor 51. By determining a Cartesian coordinate system according to this directional parameter in the three-dimensional collision sensor 51, the outputted three-dimensional motion data may be used to directly determine that a collision with the fork lift 1 has occurred and how severe the collision is. This is enabled since the three-dimensional motion data directly correlate with the orientation of the fork lift 1.

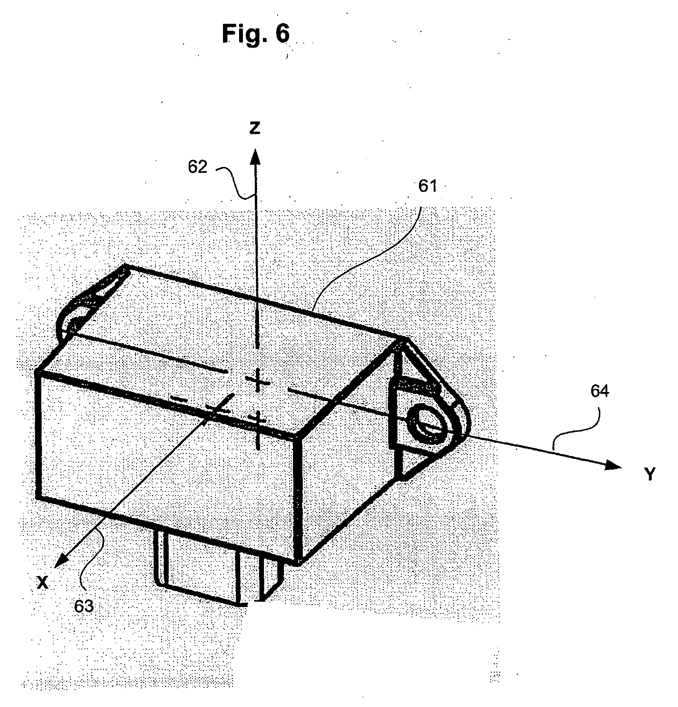

In the exemplary orientation according to Fig. 6, the three-dimensional collision sensor 61 is oriented to be mounted on the side and vertically attached to the fork lift 1. The Cartesian z-axis 62 in Fig. 5 is determined based on gravity as previously described. By having the three-dimensional collision sensor 61 oriented to be mounted on the side and vertically attached to the fork lift 1, there are 4 degrees of freedom in its further orientation, since it must correlate with how the three-dimensional collision sensor 61 is actually mounted on the fork lift 1.

The first orientation (shown in Fig. 6) of the three-dimensional collision sensor 61 is to mount the three-dimensional collision sensor 61 on the fork lift 1, with the x-axis 63 oriented in the forward direction of the fork lift 1 and the y-axis 64 oriented in the left direction of the fork lift 1.

The second orientation of the three-dimensional collision sensor 61 is to mount the three-dimensional collision sensor 61 on the fork lift 1 rotated 180° about the Cartesian x-axis 63, that is, with the x-axis 63 still oriented in the forward direction of the fork lift 1, but the y-axis 64 now oriented in the right direction of the fork lift 1. That is, the obtained view as the three-dimensional collision sensor 61, oriented as shown in Fig. 6, is turned upside-down.

The third orientation of the three-dimensional collision sensor 61 is to mount three-dimensional collision sensor 61 on the fork lift 1 rotated 180° about the Cartesian y-axis 64, that is, with the x-axis 63 now oriented in the backward direction of the fork lift 1 and the y-axis 64 still oriented in the left direction of the fork lift 1. That is, the obtained view as the three-dimensional collision sensor 61, oriented as shown in Fig. 6, is turned upside-down and backwards.

The fourth orientation of the three-dimensional collision sensor 61 is to mount the three-dimensional collision sensor 61 on the fork lift 1 rotated 180° about the Cartesian z-axis 62, that is, with x-axis 63 now oriented in the backward direction of the fork lift 1 and the y-axis 64 now oriented in the right direction of the fork lift 1. That is, the obtained view as the three-dimensional collision sensor 61, oriented as shown in Fig. 6, is turned backwards.

Depending on how the three-dimensional collision sensor 61 is actually mounted on the fork lift 1 according to any of the orientations described above, the directional parameter in the control unit 36 may be arranged to indicate this orientation that is actually used in the mounting to the three-dimensional collision sensor 61. By determining a Cartesian coordinate system according to this directional parameter in the three-dimensional collision sensor 61, the outputted three-dimensional motion data may be used to directly determine that a collision with the fork lift 1 has occurred and how severe the collision is. This is enabled since the three-dimensional motion data directly correlate with the orientation of the fork lift 1.

The present invention therefore, as described by the orientations shown in Fig. 4-6, provides 12 degrees of freedom when mounting the three-dimensional collision sensor 31, 41, 51, 61 on a fork lift 1. According to the prior art, the conventional two-dimensional collision sensor 21 only allows 4 degrees of freedom when mounting a collision sensor on a fork lift 1. It should also be noted that these 12 degrees of freedom are available to a manufacturer when mounting the three-dimensional collision sensor 31, 41, 51, 61 on a fork lift, wherein the directional parameter may be a predetermined directional parameter that is set in the collision sensor 31 upon manufacturing.

An additional advantage achieved by the present invention, is that it allows increased collision information for analysis in the up- or down direction of the fork lift 1. This may be beneficial if, for example, there is unevenness is the floor of a store building, such as, a pit or a speed bump, which may cause damage to the fork lift 1. The collision measurement information in the up- or down direction may then be used to, for example, detect such unevenness's, determine speed limits, analyse the effects of such movements on the machinery of the fork lift 1 or provide a safer working environment.

Furthermore, by having a detachable power I/O cable 34 and/or communications bus 35, the present invention further allows for a simpler and easier mounting of the three-dimensional collision sensor on the fork lift 1, and further allows easier cabling between the three-dimensional collision sensor 31, 41, 51, 61 and the collision sensor 36.

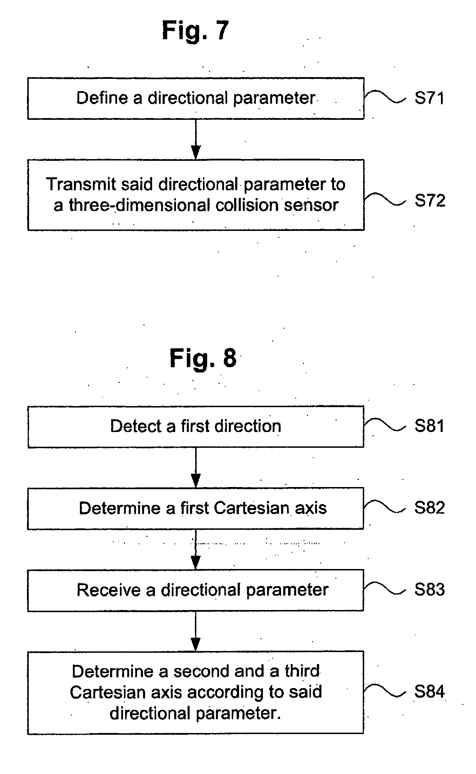

Fig. 7 illustrates an exemplary operation of a control unit 36 according to an embodiment of the present invention.

In step S71, a directional parameter is defined. The directional parameter is determined by the actual orientation of the three-dimensional collision sensor 31, 41, 51, 61 when mounted on a fork lift 1. Depending on the most suitable position and orientation of the three-dimensional collision sensor 31, 41, 51, 61 on the fork lift 1, the three-dimensional collision sensor 31, 41, 51, 61 may be oriented in any of the 12 different orientations described above. This orientation may then be indicated by a predetermined value of the directional parameter in the control unit 36 or be manually set by a manufacturer upon installing the control unit 36 and the collision sensor 31.

In step S72, the directional parameter is transmitted to a three-dimensional collision sensor 31, 41, 51, 61.

Fig. 8 illustrates an exemplary operation of a three-dimensional collision sensor 31 according to an embodiment of the present invention.

In step S81, a first direction is detected. The three-dimensional collision sensor 31, 41, 51, 61 may use the gravitational force of the Earth in order to determine this first direction. In step S82, a first Cartesian axis is determined as the up- or down direction as indicated by the determined first direction.

In step S83, a directional parameter may either be received as a predetermined directional parameter already present in the collision sensor 31, or may be received externally from a control unit 36. The directional parameter may be arranged to inform the three-dimensional collision sensor 31, 41, 51, 61 about the actual orientation of the three-dimensional collision sensor 31, 41, 51, 61 when mounted on the fork lift 1. In step S84, the three-dimensional collision sensor determines a second and a third Cartesian axis according to said directional parameter. The second and third Cartesian axis may be oriented as indicated by the directional parameter, and such that they are mutually perpendicular to each other and to the determined first Cartesian axis.

An example of a superior supervising system, as previously mentioned, is a main server arranged to receive the three-dimensional motion data from the control unit 36. The main server may be arranged to continuously receive said three-dimensional motion data from the control unit 36 through a wireless interface. The main server may also be arranged to further process and monitor the three-dimensional motion data from the control unit 36. An example of the processing performed by the main server may be to gather statistical information regarding the status of the fork lifts. Another example of the processing performed by the main server may be to gather statistical information about how each individual operator drives and uses the fork lifts. This may be performed since each operator may have an individual PIN-code that they must enter before being able to use a fork lift. Each operator may use several different fork lifts, and a fork lift may be used by several different operators during a work shift.

The main server may also be arranged output the three-dimensional motion data, or a processed version of said three-dimensional motion data, in order for it to be displayed to a user of, for example, a supervising computer or a web interface. Thus, the outputted three-dimensional motion data may enable, for example, a supervisor to monitor the status of all of the fork lifts used by the operators under his supervision.

The description above is of the best mode presently contemplated for practising the present invention. The description is not intended to be taken in a limiting sense, but is made merely for the purpose of describing the general principles of the invention. The scope of the present invention should only be ascertained with reference to the issued claims.

## Claims

1. A collision sensor arrangement (30) for detecting a collision of a fork lift vehicle (1), comprising a collision sensor being a three-dimensional collision sensor (31; 41; 51; 61) comprising an accelerometer (32) capable of registering and outputting motions along each perpendicular axis (x, y, z) of a Cartesian coordinate system (3),
**characterized in that**
said three-dimensional collision sensor (31; 41; 51; 61) is arranged to
upon powering up, automatically detect a first direction based on the gravitational force;
determine a first Cartesian axis (z) as said detected first direction; and
determine a second (x) and a third (y) Cartesian axis mutually perpendicular to each other and to said first Cartesian axis (z) according to a directional parameter that is indicative of how the second (x) and third (y) Cartesian axis should be determined in order for the output values of the three-dimensional collision sensor (31;41;51;61) to correspond correctly to the orientation of the fork lift vehicle (1).

2. A collision sensor arrangement (30) according to claim 1, wherein said directional parameter defines the second (x) Cartesian axis as pointing in the forward or backward direction of the fork lift vehicle (1), or the third (y) Cartesian axis as pointing to the right or left side of the fork lift vehicle (1).

3. A collision sensor arrangement (30) according to claim 1, wherein said directional parameter defines the second (x) Cartesian axis as pointing in the right or left direction of the fork lift vehicle (1), and the third (y) Cartesian axis as pointing in the forward or backward direction of the fork lift vehicle (1), whereby a control unit (36) is further arranged to perform a transformation of values registered in the direction of said second (x) Cartesian axis and third (y) Cartesian axis, so that said transformed values are interpreted as values registered in the direction of said third (y) Cartesian axis and second (x) Cartesian axis, respectively.

4. A collision sensor arrangement (30) according to any one of the claims 1-3, wherein said directional parameter is a settable parameter.

5. A collision sensor arrangement (30) according to any one of the claims 1- 4, wherein said three-dimensional collision sensor (31; 41; 51; 61) is provided with a power socket (34) for detachably connecting a power cable to said three-dimensional collision sensor (31; 41; 51; 61).

6. Method for enabling the detection of a collision of a fork lift vehicle comprising a collision sensor, wherein said collision sensor is a three-dimensional collision sensor (31; 41; 51; 61) comprising an accelerometer (36) capable of registering and outputting motions along each perpendicular axis (x, y, z) of a Cartesian coordinate system,
**characterized by**
the steps of:
automatically detecting, upon powering up the collision sensor, a first direction based on the gravitational force;
determining a first Cartesian axis (z) as said detected first direction; and
determining a second (x) and a third (y) Cartesian axis mutually perpendicular to each other and to said first Cartesian axis (z) according to a directional parameter that is indicative of how the second (x) and third (y) Cartesian axis should be determined in order for the output values of the three-dimensional collision sensor (31; 41; 51; 61) to correspond correctly to the orientation of the fork lift vehicle (1).

7. A method according to claim 6, wherein said directional parameter defines the second (x) Cartesian axis as pointing in the forward or backward direction of the fork lift vehicle (1), or the third (y) Cartesian axis as pointing to the right or left side of the fork lift vehicle (1).

8. A method according to claim 6, wherein said directional parameter defines the second (x) Cartesian axis as pointing in the right or left direction of the fork lift vehicle (1), and the third (y) Cartesian axis as pointing in the forward or backward direction of the fork lift vehicle (1), whereby said method further comprises the step of:
performing a transformation of values registered in the direction of said second (x) Cartesian axis and third (y) Cartesian axis, so that said transformed values are interpreted as values registered in the direction of said third (y) Cartesian axis and second (x) Cartesian axis, respectively.

9. A method according to any one of the claims 6-8, further comprising the step of:
shutting down or limit the operation of said fork lift vehicle (1) based on values forwarded by said three-dimensional collision sensor (31; 41; 51; 61).

10. A computer program product for use in a three-dimensional collision sensor (31; 41; 51; 61) in a collision sensor arrangement (30) on a fork lift vehicle (1), said computer program product comprising computer readable code means, which when run in the a three-dimensional collision sensor (31; 41; 51; 61) causes said three-dimensional collision sensor (31;41;51;61) to perform the steps of:
automatically detecting, upon powering up said three-dimensional collision sensor (31; 41; 51; 61), a first direction based on the gravitational force;determining a first Cartesian axis (z) as said detected first direction;
determining a second (x) and a third (y) Cartesian axis mutually perpendicular to each other and to said first Cartesian axis (z) according to a directional parameter that is indicative of how the second (x) and third (y) Cartesian axis should be determined in order for the output values of the three-dimensional collision sensor (31; 41; 51; 61) to correspond correctly to the orientation of the fork lift vehicle (1).

11. A computer program product for use in a three-dimensional collision sensor (31;41;51;61) according to claim 10, wherein said three-dimensional collision sensor (31;41;51;61) comprises computer readable code means, which when run in said three-dimensional collision sensor (31;41;51;61) performs the steps according to any one of the claims 7-9.

12. A computer program product for use in collision sensor arrangement according claim 10 or 11, wherein said code means is stored on a readable storage medium.

## Patentansprüche

1. Kollisionssensoranordnung (30) zum Erfassen einer Kollision eines Gabelstaplerfahrzeugs (1), die einen Kollisionssensor aufweist, der ein dreidimensionaler Kollisionssensor (31; 41; 51; 61) ist, der einen Beschleunigungsmesser (32) aufweist, der fähig ist, Bewegungen entlang jeder senkrechten kartesischen Achse (x, y, z) eines Koordinatensystems (3) zu registrieren und auszugeben,
**dadurch gekennzeichnet, dass**
der dreidimensionale Kollisionssensor (31; 41; 51; 61) eingerichtet ist, um
beim Einschalten automatisch eine erste Richtung basierend auf der Schwerkraft zu erfassen,
eine erste kartesische Achse (z) als die erfasste erste Richtung zu bestimmen und
eine zweite kartesische Achse (x) und eine dritte kartesische Achse (y), die zueinander und zu der ersten kartesischen Achse (z) senkrecht sind, gemäß einem Richtungsparameter zu bestimmen, der anzeigt, wie die zweite (x) und dritte (y) kartesische Achse bestimmt werden sollen, damit die Ausgangswerte des dreidimensionalen Kollisionssensors (31; 41; 51; 61) genau der Ausrichtung des Gabelstaplerfahrzeugs (1) entsprechen.

2. Kollisionssensoranordnung (30) nach Anspruch 1, wobei der Richtungsparameter die zweite (x) kartesische Achse als in die Vorwärts- oder Rückwärtsrichtung des Gabelstaplerfahrzeugs (1) zeigend definiert, oder die dritte (y) kartesische Achse als zur rechten oder zur linken Seite des Gabelstaplerfahrzeugs (1) zeigend definiert.

3. Kollisionssensoranordnung nach Anspruch 1, wobei der Richtungsparameter die zweite (x) kartesische Achse als in die rechte oder linke Richtung des Gabelstaplerfahrzeugs (1) zeigend definiert und die dritte (y) kartesische Achse als in die Vorwärts- oder Rückwärtsrichtung des Gabelstaplerfahrzeugs (1) zeigend, wobei eine Steuereinheit (36) ferner eingerichtet ist, um eine Umwandlung von Werten auszuführen, die in die Richtung der zweiten (x) kartesischen Achse und dritten (y) kartesischen Achse registriert sind, so dass die umgewandelten Werte als Werte ausgelegt werden, die jeweils in die Richtung der dritten (y) kartesischen Achse und zweiten (x) kartesischen Achse registriert sind.

4. Kollisionssensoranordnung (30) nach einem der Ansprüche 1 bis 3, wobei der Richtungsparameter ein einstellbarer Parameter ist.

5. Kollisionssensoranordnung (30) nach einem der Ansprüche 1 bis 4, wobei der dreidimensionale Kollisionssensor (31; 41; 51; 61) mit einer Steckdose (34) versehen ist, um ein Netzkabel abnehmbar an dem dreidimensionalen Kollisionssensor (31; 41; 51; 61) anzuschließen.

6. Verfahren zum Ermöglichen des Erfassens einer Kollision eines Gabelstaplerfahrzeugs, das einen Kollisionssensor aufweist, wobei der Kollisionssensor ein dreidimensionaler Kollisionssensor (31; 41; 51; 61) ist, der einen Beschleunigungsmesser (32) aufweist, der fähig ist, Bewegungen entlang jeder senkrechten kartesischen Achse (x, y, z) eines Koordinatensystems zu registrieren und auszugeben,
**gekennzeichnet durch**
die folgenden Schritte:
automatisches Erfassen beim Einschalten des Kollisionssensors einer ersten Richtung basierend auf der Schwerkraft,
Bestimmen einer ersten kartesischen Achse (z) als erfasste erste Richtung, und
Bestimmen einer zweiten (x) und einer dritten (y) kartesischen Achse, die zueinander und zu der ersten kartesischen Achse (z) senkrecht sind, gemäß einem Richtungsparameter, der anzeigt, wie die zweite (x) und dritte (y) kartesische Achse bestimmt werden sollen, damit die Ausgangswerte des dreidimensionalen Kollisionssensors (31; 41; 51; 61) der richtigen Ausrichtung des Gabelstaplerfahrzeugs (1) entsprechen.

7. Verfahren nach Anspruch 6, wobei der Richtungsparameter die zweite (x) kartesische Achse als in die Vorwärts- oder Rückwärtsrichtung des Gabelstaplerfahrzeugs (1) zeigend definiert, oder die dritte (y) kartesische Achse als zu der rechten oder linken Seite des Gabelstaplerfahrzeugs (1) zeigend.

8. Verfahren nach Anspruch 6, wobei der Richtungsparameter die zweite (x) kartesische Achse als in die rechte oder linke Richtung des Gabelstaplerfahrzeugs (1) zeigend definiert und die dritte (y) kartesische Achse als in die Vorwärts- oder Rückwärtsrichtung des Gabelstaplerfahrzeugs (1) zeigend, wobei das Verfahren die folgenden Schritte aufweist:
Ausführen einer Umwandlung von Werten, die in die Richtung der zweiten (x) kartesische Achse und dritten (y) kartesischen Achse registriert sind, so dass die umgewandelten Werte als Werte ausgelegt werden, die jeweils in die Richtung der dritten (y) kartesischen Achse und zweiten (x) kartesischen Achse (x) registriert sind.

9. Verfahren nach einem der Ansprüche 6 bis 8, das ferner die folgenden Schritte aufweist:
Ausschalten oder Einschränken des Betriebs des Gabelstaplerfahrzeugs (1) basierend auf Werten, die von dem dreidimensionalen Kollisionssensor (31; 41; 51; 61) weitergegeben werden.

10. Computerprogrammprodukt für den Gebrauch in einem dreidimensionalen Kollisionssensor (31; 41; 51; 61) in einer Kollisionssensoranordnung (30) auf einem Gabelstaplerfahrzeug (1), wobei das Computerprogrammprodukt computerlesbare Codemittel aufweist, die, wenn sie in einem dreidimensionalen Kollisionssensor (31; 41; 51; 61) ausgeführt werden, den dreidimensionalen Kollisionssensor (31; 41; 51; 61) veranlassen, die folgenden Schritte auszuführen:
automatisches Erfassen beim Einschalten des dreidimensionalen Kollisionssensors (31; 41; 51; 61) einer ersten Richtung basierend auf der Schwerkraft, Bestimmen einer ersten kartesischen Achse (z) als die erfasste erste Richtung,
Bestimmen einer zweiten (x) und einer dritten (y) kartesische Achse, die zueinander und zu der ersten kartesische Achse (z) senkrecht sind gemäß einem Richtungsparameter, der anzeigt, wie die zweite (x) und dritte (y) kartesische Achse bestimmt werden sollen, damit die Ausgangswerte des dreidimensionalen Kollisionssensors (31; 41; 51; 61) richtig der Ausrichtung des Gabelstaplerfahrzeugs (1) entsprechen.

11. Computerprogrammprodukt für den Gebrauch in einem dreidimensionalen Kollisionssensor (31; 41; 51; 61) nach Anspruch 10, wobei der dreidimensionale Kollisionssensor (31; 41; 51; 61) computerlesbare Codemittel aufweist, die, wenn sie in dem dreidimensionalen Kollisionssensor (31; 41; 51; 61) ausgeführt werden, die Schritte nach einem der Ansprüche 7 bis 9 ausführen.

12. Computerprogrammprodukt für den Gebrauch in einer Kollisionssensoranordnung nach Anspruch 10 oder 11, wobei die Codemittel in einem lesbaren Datenträger gespeichert sind.

## Revendications

1. Dispositif de détecteur de collision (30) destiné à détecter une collision d'un chariot élévateur à fourche (1), comprenant un détecteur de collision qui est un détecteur de collision tridimensionnel (31; 41; 51; 61) comprenant un accéléromètre (32) capable d'enregistrer et de délivrer en sortie des mouvements le long de chaque axe perpendiculaire (x, y, z) d'un système de coordonnées cartésiennes (3) ;
**caractérisé en ce que** :
ledit détecteur de collision tridimensionnel (31 ; 41 ; 51 ; 61) est agencé de façon à :
détecter de manière automatique, à la mise sous tension, une première direction sur la base de la force de gravitation ;
déterminer un premier axe cartésien (z) en tant que dite première direction détectée ; et
déterminer des deuxième (x) et troisième (y) axes cartésiens mutuellement perpendiculaires l'un par rapport à l'autre et audit premier axe cartésien (z) selon un paramètre de direction qui est indicatif de la façon dont les deuxième (x) et troisième (y) axes cartésiens doivent être déterminés afin que les valeurs de sortie du détecteur de collision tridimensionnel (31 ; 41 ; 51 ; 61) correspondent de manière correcte à l'orientation du chariot élévateur à fourche (1).

2. Dispositif de détecteur de collision (30) selon la revendication 1, dans lequel ledit paramètre de direction définit le deuxième (x) axe cartésien comme pointant dans la direction vers l'avant ou vers l'arrière du chariot élévateur à fourche (1), ou le troisième (y) axe cartésien comme pointant vers le côté droit ou vers le côté gauche du chariot élévateur à fourche (1).

3. Dispositif de détecteur de collision (30) selon la revendication 1, dans lequel ledit paramètre de direction définit le deuxième (x) axe cartésien comme pointant dans la direction à droite ou à gauche du chariot élévateur à fourche (1), et le troisième (y) axe cartésien comme pointant dans la direction vers l'avant ou vers l'arrière du chariot élévateur à fourche (1), grâce à quoi une unité de commande (36) est en outre agencée de façon à exécuter une transformation des valeurs enregistrées dans la direction dudit deuxième (x) axe cartésien et dudit troisième (y) axe cartésien, de telle sorte que lesdites valeurs transformées soient interprétées comme étant des valeurs enregistrées dans la direction dudit troisième (y) axe cartésien et dudit deuxième (x) axe cartésien, respectivement.

4. Dispositif de détecteur de collision (30) selon l'une quelconque des revendications 1 à 3, dans lequel ledit paramètre de direction est un paramètre réglable.

5. Dispositif de détecteur de collision (30) selon l'une quelconque des revendications 1 à 4, dans lequel ledit détecteur de collision tridimensionnel (31 ; 41 ; 51 ; 61) est doté d'une prise d'alimentation (34) destinée à connecter de manière amovible un câble d'alimentation audit détecteur de collision tridimensionnel (31 ; 41 ; 51 ; 61).

6. Procédé destiné à permettre la détection d'une collision d'un chariot élévateur à fourche comprenant un détecteur de collision, dans lequel ledit détecteur de collision est un détecteur de collision tridimensionnel (31 ; 41 ; 51 ; 61) comprenant un accéléromètre (32) capable d'enregistrer et de délivrer en sortie des mouvements le long de chaque axe perpendiculaire (x, y, z) d'un système de coordonnées cartésiennes ;
**caractérisé par** :
les étapes consistant à :
détecter de manière automatique, à la mise sous tension du détecteur de collision, une première direction sur la base de la force de gravitation ;
déterminer un premier axe cartésien (z) en tant que dite première direction détectée ; et
déterminer des deuxième (x) et troisième (y) axes cartésiens mutuellement perpendiculaires l'un par rapport à l'autre et audit premier axe cartésien (z) selon un paramètre de direction qui est indicatif de la façon dont les deuxième (x) et troisième (y) axes cartésiens doivent être déterminés afin que les valeurs de sortie du détecteur de collision tridimensionnel (31 ; 41 ; 51 ; 61) correspondent de manière correcte à l'orientation du chariot élévateur à fourche (1).

7. Procédé selon la revendication 6, dans lequel ledit paramètre de direction définit le deuxième (x) axe cartésien comme pointant dans la direction vers l'avant ou vers l'arrière du chariot élévateur à fourche (1), ou le troisième (y) axe cartésien comme pointant vers le côté droit ou vers le côté gauche du chariot élévateur à fourche (1).

8. Procédé selon la revendication 6, dans lequel ledit paramètre de direction définit le deuxième (x) axe cartésien comme pointant dans la direction à droite ou à gauche du chariot élévateur à fourche (1), et le troisième (y) axe cartésien comme pointant dans la direction vers l'avant ou vers l'arrière du chariot élévateur à fourche (1), grâce à quoi ledit procédé comprend en outre l'étape consistant à :
exécuter une transformation des valeurs enregistrées dans la direction dudit deuxième (x) axe cartésien et dudit troisième (y) axe cartésien, de telle sorte que lesdites valeurs transformées soient interprétées comme étant des valeurs enregistrées dans la direction dudit troisième (y) axe cartésien et dudit deuxième (x) axe cartésien, respectivement.

9. Procédé selon l'une quelconque des revendications 6 à 8, comprenant en outre l'étape consistant à :
arrêter ou limiter le fonctionnement dudit chariot élévateur à fourche (1) sur la base des valeurs envoyées par ledit détecteur de collision tridimensionnel (31 ; 41 ; 51 ; 61).

10. Produit programme informatique destiné à être utilisé dans un détecteur de collision tridimensionnel (31 ; 41 ; 51 ; 61) dans un dispositif de détecteur de collision (30) sur un chariot élévateur à fourche (1), ledit produit programme informatique comprenant des moyens de code lisibles par un ordinateur qui, quand ils sont exécutés dans le détecteur de collision tridimensionnel (31 ; 41 ; 51 ; 61), font exécuter par ledit détecteur de collision tridimensionnel (31 ; 41 ; 51 ; 61) les étapes consistant à :
détecter de manière automatique, à la mise sous tension dudit détecteur de collision tridimensionnel (31;41;51;61), une première direction sur la base de la force de gravitation ;
déterminer un premier axe cartésien (z) en tant que dite première direction détectée ;
déterminer des deuxième (x) et troisième (y) axes cartésiens mutuellement perpendiculaires l'un par rapport à l'autre et audit premier axe cartésien (z) selon un paramètre de direction qui est indicatif de la façon dont les deuxième (x) et troisième (y) axes cartésiens doivent être déterminés afin que les valeurs de sortie du détecteur de collision tridimensionnel (31 ; 41 ; 51 ; 61) correspondent de manière correcte à l'orientation du chariot élévateur à fourche (1).

11. Produit programme informatique destiné à être utilisé dans un détecteur de collision tridimensionnel (31;41;51;61) selon la revendication 10, dans lequel ledit détecteur de collision tridimensionnel (31 ; 41 ; 51; 61) comprend des moyens de code lisibles par un ordinateur qui, quand ils sont exécutés dans ledit détecteur de collision tridimensionnel (31 ; 41 ; 51 ; 61) exécutent les étapes selon l'une quelconque des revendications 7 à 9.

12. Produit programme informatique destiné à être utilisé dans un dispositif de détecteur de collision selon la revendication 10 ou 11, dans lequel lesdits moyens de code sont stockés dans un support de stockage lisible par un ordinateur.
